# EUROPEAN PATENT SPECIFICATION

(11) **EP 2 944 184 B1**
(45) Date of publication and mention of the grant of the patent: **06.02.2019**
(21) Application number: 13870751.8
(22) Date of filing: 19.12.2013
(51) Int. Cl.: A01G 7/06, A01N 37/08, A01P 21/00, A01N 37/42

(54) **USE OF CYCLOHEXANEDIONECARBOXYLIC ACID DERIVATIVES FOR INCREASING YIELD AMOUNT AND CONTENT OF AMINO ACIDS IN SOLANACAEA CROP**
VERWENDUNG VON CYCLOHEXANDIONCARBONSÄUREDERIVATEN ZUR ERHÖHUNG DER AUSBEUTEMENGE UND GEHALTS VON AMINOSÄUREN IN SOLANACAEA-ERNTEGUT
UTILISATION DE DERIVÉS CYCLOHEXANEDIONE D'ACIDE CARBOXYLIQUE POUR ACCROÎTRE LE RENDEMENT ET LA TENEUR EN ACIDES AMINÉS DANS UNE CULTURE DE SOLANACÉES

(30) Priority: 08.01.2013 JP 2013001378
(43) Date of publication of application: 18.11.2015
(73) Proprietor: Kumiai Chemical Industry Co., Ltd., Taito-ku Tokyo 110-8782 (JP)
(72) Inventor: IDA, Masashi, Tokyo 110-8782 (JP); TAKAHASHI, Yoshitaka, Tokyo 110-8782 (JP); FUJINAMI, Makoto, Tokyo 110-8782 (JP); HANAI, Ryo, Tokyo 110-8782 (JP)
(74) Representative: Uchida, Kenji
(86) International application number: PCT/JP2013/084166
(87) International publication number: WO 2014/109206

(56) References cited:
- EP-A1- 1 982 592
- EP-B1- 1 028 625
- WO-A1-2007/086372
- WO-A2-2010/034813
- WO-A2-2011/063948
- JP-A- 2005 013 001
- JP-A- 2010 215 555
- DATABASE WPI Thomson Scientific, London, GB; AN 1999-088815 XP002757777, "Production of amino acid rich vegetables-comprises applying fast acting nitrogen fertilisers on plants for increasing amino acid content during harvesting", & JP 10 323128 A (KAGOME KK) 12 August 1998 (1998-08-12)
- SERGIO TONETTO DE FREITAS: 'Mechanisms Involved in Calcium Deficiency Development in Tomato Fruit in Response to Gibberellins' JOURNAL OF PLANT GROWTH REGULATION vol. 31, no. 2, 2012, pages 221 - 234, XP035047560

## Description

### [Technical Field]

The present invention relates to the use of an agent containing a cyclohexane derivative (I) and/or its salt as recited in claim 1 for increasing the yields of solanaceous crop, in detail represented by tomato or potato, and the content of GABA.

### [Background Art]

In and after the 20th century, the world population abruptly increased. The world population which was approximately 1.6 billion in 1900 has reached 6 billion at the end of the 20th century, and at present, it is estimated that the world population exceeds 7 billion. It is considered that the increase of the world population will continue in the future, and it is expected that the world population will break through 9 billion in the middle of the twenty-first century (World Population Prospects, the 2010 Revision) . It is expected that following such an increase of the population, the demand for food will naturally increase, and how to provide food for people in all over the world is an extremely important problem which we shall come face-to-face with in the future.

In order to solve this problem, an enlargement of farmland or an increase of production (yield) per unit area is needed. However, the acreage under cultivation in the world substantially remains on the same level from the 1960s, and it is considered that the development of a suitable arable land already finished in the middle of the 20th century. Accordingly, an increase of the yield is the only dissolution method left, and the development of a measure making it possible to increase the yield is one of the greatest problems in the crop and horticultural fields.

On the other hand, in addition to quantitative insurance of food, in recent years, a great importance is attached to the quality of food and eating in Japan. The quality (value) of food and eating includes nutrition value and tastiness or preference, and in addition thereto, an interest in functional components is increasing. The functional components are a substance having a living body adjusting function contained in food, and when ingested, they exhibit effects for promoting health and preventing a disease. Awareness of people concerning health is explicitly enhanced due to diffusion of fruits of studies of these days, and crops containing a lot of functional components are much watched. In consequence, the development of a measure for increasing functional components of a crop is extremely important as a means for enhancing an additional value in crop production.

As for the increase of functional components in a crop, for example, in tomato, there is found the case where a functional amino acid increases by a cultivation method of not giving water as far as possible. However, in the case of this method, the yield explicitly decreases. Any method for increasing functional components together with an increase of the yield has not been developed yet.

EP 1 982 592 discloses a method for enlarging agricultural and horticultural crops, such as fruits. EP 1 028 625 discloses a plant growth regulator for inhibiting a longitudinal growth, reducing trimming, restricting annual fluctuations in fruit tree yield, making resistant to adverse weather conditions etc. WO 2011/063948 D3 discloses a plant growth regulator for making flowers to bloom at a desired time, reducing the height of a crop etc. WO 2010/034813 discloses a method for improving the development of gramineous plants in which the plants are treated with a combination of acylcyclohexanedione carboxylic acid or its salt and acylcyclohexanedione carboxylic acid esters.

### [Summary of the Invention]

### [Problem To Be Solved by the Invention]

Under the foregoing technical background, the present invention has been made for the purposes of providing a component capable of not only increasing the yield of a variety of agricultural and horticultural crops simply and efficiently but also increasing the content of a functional amino acid in crops, and constructing a cultivation system using the component concerned.

### [Means for Solving the Problem]

In order to achieve the foregoing purposes, the present inventors made investigations from various directions. As a result, they have first found that when an agent containing a specified cyclohexane derivative as an active ingredient is applied to a solanaceous crop, quite unexpectedly, an effect for increasing the content of GABA is obtained simultaneously with an excellent effect for increasing the yield, leading to accomplishment of the present invention.

Specifically, embodiments of the present invention are as recited in the claims 1 to 6.

### [Effect of the Invention]

The cyclohexane derivative represented by the formula (I), which is used in the present invention, is a novel compound which the present inventors have previously successfully developed and is known to have a growth-controlling activity against fruit trees. However, solanaceous crops are herbaceous crops and are quite different from fruit trees in terms of characteristic features including forms. In addition, influences due to the application of the cyclohexane derivative against the content of functional components have been unknown relative to any plant bodies.

Under such a technical background, the present invention has been accomplished. In accordance with the present invention, there are brought not only an effect for increasing the yield of herbaceous crops, that are solanaceous crops, which are explicitly different from fruit trees but also an effect for increasing the content of GABA.

This is an extremely characteristic and conspicuous effect, and the present invention brings a significant benefit for agricultural workers who conduct the production of solanaceous crops, and in its turn, it is a beneficial technology even for consumers.

### [Modes for Carrying Out the Invention]

The cyclohexane derivative which is used in the present invention is one represented by the formula (I) and having a structure of the following chemical 1. 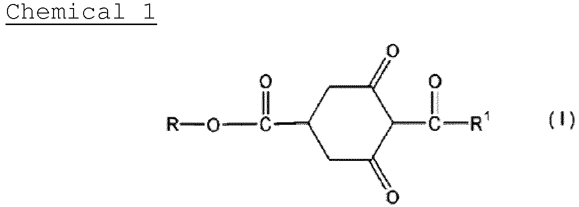 (In the formula, R represents hydrogen, a C₁ to C₆ alkyl group, a C₁ to C₆ haloalkyl group, or a phenyl group; and R¹ represents hydrogen, a C₁ to C₆ alkyl group, a C₃ to C₆ cycloalkyl group, or a benzyl group; and the salt represents an alkali metal salt or an alkaline earth metal salt.)

As the cyclohexane derivative (I), the above-described compound may be used singly or in combination of two or more kinds thereof. For example, in the formula (I), R represents hydrogen or a C₁ to C₆ alkyl group; R¹ represents a C₁ to C₆ alkyl group or a C₃ to C₆ cycloalkyl group; and the salt represents an alkali metal (e.g., sodium, potassium.), an alkaline earth metal (e.g., calcium, magnesium.), aluminum, copper, nickel, manganese, cobalt, zinc, iron, or silver, and preferably, a compound of the case representing a calcium salt is exemplified as a suitable example.

The cyclohexane derivative (I) can be, for example, produced in the following manner according to JP-B-4-29659 (following chemical 2).

That is, a compound (VI) can be produced by allowing a compound (IV) or a compound (V) (in the formula, M¹ represents an alkali metal; and R has the same meanings as those described above) and an acid chloride (R¹COCl: R¹ has the same meanings as those described above) to react with each other in the presence or absence of γ-picoline in the presence or absence of a base and in the presence of a solvent at a temperature in the range of from -20 °C to a boiling point of the solvent, and preferably not higher than room temperature for from 10 minutes to 7 hours.

Here, examples of the base include organic bases such as trimethylamine, triethylamine, tripropylamine, tributylamine, pyridine, 4-N,N-dimethylaminopyridine.; and inorganic bases such as sodium hydroxide, potassium hydroxide, sodium carbonate, potassium carbonate, sodium bicarbonate.

The compound (I) can be produced by allowing the compound (VI) to react in the presence of a catalyst and a solvent at a temperature in the range of from room temperature to a boiling point of the solvent for from 1 to 10 hours.

Here, examples of the catalyst include pyridine derivatives such as 4-N,N-dimethylaminopyridine, 4-N,N-diethylaminopyridine, 4-pyrrolidinoaminopyridine.; and N-alkylimidazole derivatives such as N-ethylimidazole.

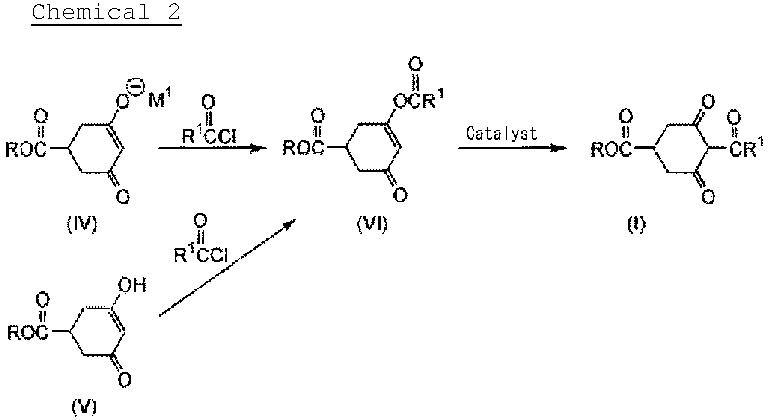

In addition, commercially available products can also be used, and for example, prohexadione and prohexadione-calcium represented by the following chemicals 3 and 4 (formulae (II) and (III) : these are all commercially available, and in particular, the prohexadione-calcium that is commercially available in the trade names of "VIVIFUL (a registered trademark for a product of Kumiai Chemical Industry Co.., Ltd.)", "CALTIME (a registered trademark for a product of Kumiai Chemical Industry Co.., Ltd.)", and "BIOLOCK (a registered trademark for a product of Rikengreen Co., Ltd.)") can be properly used. Furthermore, as other examples, trinexapac-ethyl represented by the following chemical 5 (formula (VII)) (this is also commercially available in the trade names of "PRIMO MAXX (a registered trademark for a product of Syngenta Japan K.K.)" and "SUSANO MAXX (a registered trademark for a product of Syngenta Japan K.K.)") can also be used.

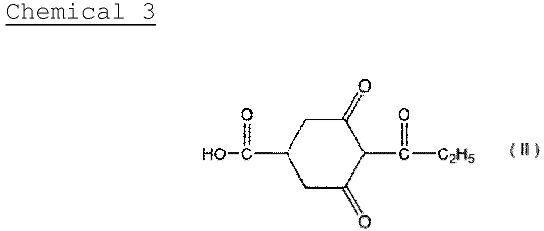

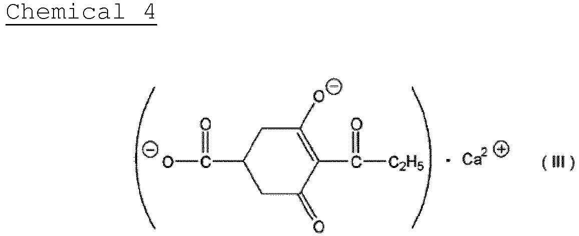

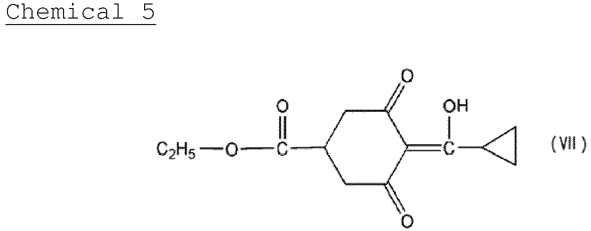

In the method of the present invention, the application amount of the cyclohexane derivative represented by the foregoing formula (I) may be properly determined depending upon a kind of the solanaceous crop, a form of formulation to be used, an application method, an application timing. The cyclohexane derivative is used in a concentration of generally from 1 to 1,000 ppm, preferably from 10 to 500 ppm, and more preferably from 10 to 250 ppm. In order to dilute it to the desired concentration, water or an aqueous solution of a surfactant, which is generally used for dilution of agricultural chemicals, is used.

If desired, the cyclohexane derivative which is used in the method of the present invention can be formulated into a variety of forms such as a wettable powder, an emulsion, a powder, a granule, a wettable granul, a paste., by incorporating with conventional adjuvants which are in general agriculturally used, such as a carrier, an emulsifier, a dispersant, a spreader, a wetting agent, a sticking agent or adhesive agent, a disintegrating agent.

As examples of the adjuvant which is used herein there can be mentioned those as described below. As examples of liquid carriers there can be mentioned water; alcohols such as ethanol, methanol.; ketones such as acetone.; esters such as ethyl acetate. In addition, as the emulsifier or dispersant, in general, a surfactant is used, and examples thereof include anionic surfactants, cationic surfactants, and amphoteric ionic surfactants, such as sodium higher alcohol sulfates, stearyl trimethylammonium chloride, polyoxyethylene alkylphenyl ethers, lauryl betaine. In the case of the paste agent, lanolin, vaseline, are used.

In the method of the present invention, one or two or more kinds of the cyclohexane derivatives represented by the foregoing formula (I) are applied alone. Also they may be applied in combination with one or two or more kinds of agriculturally acceptable components, for example, insecticide, acaricide, nematicide, fungicide, herbicide, microbial preparation, fertilizer, spreader, and other agriculturally acceptable components. In the latter case, said cyclohexane derivatives and said components may be applied as a mixture to plants, or they may be applied as a single agent to plants not separately but simultaneously. Also they may be applied to plants separately, for example, while the earlier applied one is still effective the other is applied to the plants by shifting the application timing. These components are described in Noyaku Handbook (Pesticide Handbook), published by Japan Plant Protection Association; Noyaku Yoran (Pesticide Manual), published by Japan Plant Protection Association; Kumiai Noyaku Soran, published by Zen-Noh; SHIBUYA INDEX, published by Zen-Noh.

Incidentally, the present invention brings an effect for increasing the yield of a solanaceous crop and the content of GABA by merely applying only an agent containing one or two or more kinds of the cyclohexane derivatives represented by the foregoing formula (I) and/or its salt as active ingredients and is not required to jointly use other plant growth-promoting agent (plant growth-controlling agent). However, the present invention does not completely exclude the joint use of other plant growth-promoting agent.

As specific examples of the insecticide, acaricide or nematicide which is jointly used, the use of one or more members selected from 1,3-dichloropropene, BPMC, BPPS, BRP, CL900167 (Code No.), cryolite, CVMP, CYAP, DCIP, D-D, DDT, DDVP, DEP, DMTP, DNOC, DSP, ECP, EPN, MEP, MIPC, MPP, NAC, ammonium N-methyldithiocarbamate (NCS), NI-30 (Code No.), NNI-0101, PAP, PHC, RU15525 (Code No.), RZI-02-003 (Code No.), thiazosulfen, XMC, ZXI-8901 (Code No.), acrinathrin, azadirachtin, azamethiphos, azinphos-ethyl, azinphos-methyl, acequinocyl, acetamiprid, acetoprol, acephate, azocyclotin, abamectin, afidopyropen, amidoflumet, amitraz, alanycarb, aldicarb, aldoxycarb, alpha-cypermethrin, allethrin, isamidofos, isazophos, isocarbophos, isoxathion, isofenphos-methyl, isoprocarb, isopropyl O-(methoxyaminothio-phosphoryl)salicylate, ivermectin, imicyafos, imidacloprid, imiprothrin, indoxacarb, esfenvalerate, ethiofencarb, ethion, ethiprole, disulfoton, ethylene dibromide, etoxazole, etofenprox, ethoprophos, etrimfos, emamectin benzoate, empenthrin, oxamyl, oxydemeton-methyl, oxydeprofos, omethoate, sodium oleate, metam-sodium, cadusafos, kadethrin, karanjin, cartap, carbaryl, carbosulfan, carbofuran, gamma-cyhalothrin, gamma-BHC, xylylcarb, quinalphos, kinoprene, chinomethionat, coumaphos, cryolite, clothianidin, clofentezine, chromafenozide, chlorethoxyfos, chlorantraniliprole, chlordane, chloropicrin, chlorpyrifos, chlorpyrifos-methyl, chlorfenapyr, chlorfenvinphos, chlorfluazuron, chlormephos, cyazypyr, cyanophos, diafenthiuron, diamidafos, cyantraniliprole, dienochlor, cyenopyrafen, dioxabenzofos, diofenolan, dichlorvos, dicrotophos, dichlofenthion, cycloprothrin, dicofol, dicyclanil, dinotefuran, dinobuton, cyhalothrin [inclusive of gamma- and lambda-isomers], cyphenothrin [inclusive of a (1R)-trans-isomer], cyfluthrin, diflubenzuron, cyflumetofen, diflovidazin, cyhexatin, cypermethrin [inclusive of alpha-, beta-, theta-, and zeta-isomers], dimethylvinphos, dimethoate, silafluofen, cyromazine, spinosad, spinetoram, spirodiclofen, spirotetramat, spiromesifen, sulcofuron-sodium, sulfluramid, sulprofos, sulfoxaflor, sulfotep, zeta-cypermethrin, diazinon, tau-fluvalinate, thiacloprid, thiamethoxam, thiodicarb, thiocyclam, thiosultap, thionazin, thiofanox, thiometon, tetrachlorvinphos, tetradifon, tetramethrin, tetramethylfluthrin, tebupirimfos, tebufenozide, tebufenpyrad, tefluthrin, teflubenzuron, demeton-S-methyl, temephos, rotenone, deltamethrin, terbufos, tralomethrin, transfluthrin, triazamate, triazophos, trichlorfon, triflumuron, trimethacarb, tolfenpyrad, naled, nicotine, nitenpyram, nemadectin, novaluron, noviflumuron, hydroprene, vamidothion, parathion, parathion-methyl, halfenprox, halofenozide, bioallethrin, bioallethrin S-cyclopentenyl, bioresmethrin, bistrifluron, hydramethylnon, bifenazate, bifenthrin, pyflubumide, piperonyl butoxide, pymetrozine, pyraclofos, pyrafluprole, pyridaphenthion, pyridaben, pyridalyl, pyrifluquinazon, pyriprole, pyriproxyfen, pirimicarb, pyrimidifen, pirimiphos-methyl, pyrethrins, famphur, fipronil, fenazaquin, fenamiphos, phenisobromolate, fenitrothion, fenoxycarb, fenothiocarb, phenothrin [inclusive of a (1R)-trans-isomer], fenobucarb, fonofos, fenthion, phenthoate, fenvalerate, fenpyroximate, fenpropathrin, sulfuryl fluoride, butocarboxim, butoxycarboxim, buprofezin, furathiocarb, prallethrin, fluacrypyrim, fluazuron, fluensulfone, sodium fluoroacetate, flucycloxuron, flucythrinate, flusulfamide, fluvalinate, flufiprole, flupyradifurone, flupyrazofos, flufenerim, flufenoxuron, flubendiamide, flumethrin, flurimfen, flufenerim, prothiofos, flonicamid, propaphos, propargite, profenofos, profluthrin, propetamphos, propoxur, flometoquin, bromopropylate, beta-cypermethrin, beta-cyfluthrin, hexaflumuron, hexythiazox, heptafluthrin, heptenophos, permethrin, benclothiaz, bensultap, endosulfan, benzoximate, bendiocarb, benfuracarb, phoxim, phosalone, fosthiazate, fosthietan, phosphamidon, phosmet, polynactins, formetanate, phorate, petroleum oils, malathion, milbemectin, mecarbam, mesulfenfos, methomyl, metaldehyde, metaflumizon, methamidophos, metham-potassium, metham, methiocarb, methidathion, methyl isothiocyanate, methyl bromide, methoxychlor, methoxyfenozide, methothrin, metofluthrin, methoprene, metholcarb, mevinphos, meperfluthrin, monocrotophos, lambda-cyhalothrin, lufenuron, resmethrin, lepmectin, propylene glycol monolaurate, nicotine sulfate, levamisol, ethylene oxide, fenbutatin oxide, fatty acid glyceride, morantel tartrate, aluminum phosphide, phosphine, zinc phosphide, calcium cyanide, rapeseed oil, starch, soybean lecithin, BT, *Beauveria bassiana, Beauveria tenella, Verticillium lecanii, Paecilomyces tenuipes, Beauveria brongniartii, Monacrosporium phymatopagum, Pasteuria penetrans, Steinernema carpocapsae, Paecilomyces fumosoroseus,* (Z)-11-hexadecenal, (Z)-11-hexadecenyl acetate, litlure-A, litlure-B, Z-13-eicosene-10-one, (Z,E)-9,12-tetradecadienyl acetate, (Z)-9-tetradecen-1-ol, (Z)-11-tetradecenyl acetate, (Z)-9,12-tetradecadienyl acetate, (Z,E)-9,11-tetradecadienyl acetate, is exemplified. Incidentally, the BT agent as referred to herein is a general term of pesticides utilizing the bacterium belonging to *Bacillus thuringiensis,* and it includes a crystal protein produced by the bacterium, a viable bacterial spore, and a mixture of both of them. In the present invention, all of them can be used.

As specific examples of the fungicide which is jointly used, for example, one or more members selected from BAG-010 (Code No.), BAF-045 (Code No.), copper dioctanoate, DBEDC, SYP-Z-048 (Code No.), TPTA, TPTC, TPTH, azaconazole, acibenzolar-S-methyl, azoxystrobin, anilazine, ametoctradin, amisulbrom, aldimorph, isotianil, isopyrazam, isoprothiolane, isofetamid, ipconazole, iprodione, iprovalicarb, iprobenfos, imazalil, iminoctadine-albesilate, iminoctadine-triacetate, imibenconazole, echlomezole, etaconazole, ethaboxam, edifenphos, ethoxyquin, etridiazole, enestroburin, enoxastrobin, epoxiconazole, ethirimol, oxadixyl, oxazinylazole, oxathiapiprolin, oxycarboxin, oxytetracycline, oxpoconazole-fumarate, oxolinic acid, octhilinone, ofurace, orysastrobin, o-phenylphenol, kasugamycin, captafol, carpropamid, carbendazim, carboxin, carvone, quinoxyfen, chinomethionat, captan, quinconazole, quintozene, guazatine, cufraneb, kresoxim-methyl, clozylacon, chlozolinate, chloroneb, chlorothalonil, coumoxystrobin, cyazofamid, diethofencarb, diclocymet, dichlofluanid, diclomezine, dicloran, dichlorophen, dithianon, diniconazole, zineb, dinocap, diphenylamine, difenoconazole, difenzoquat, cyflufenamid, dimethyl disulfide, diflumetorim, cyproconazole, cyprodinil, simeconazole, dimethirimol, dimethomorph, cymoxanil, dimoxystrobin, ziram, silthiofam, streptomycin, spiroxamine, sedaxane, zoxamide, dazomet, thiadiazin, tiadinil, thiabendazole, thiram, thiophanate-methyl, thifluzamide, tecnazene, tecloftalam, tetraconazole, debacarb, tebuconazole, tebufloquin, dodine, terbinafine, dodemorph, triadimenol, triadimefon, triazoxide, trichlamide, tricyclazole, triticonazole, tridemorph, triflumizole, trifloxystrobin, triforine, triclopyricarb, tolylfluanid, tolclofos-methyl, tolnifanide, nabam, natamycin, naftifine, nitrapyrin, nitrothal-isopropyl, nuarimol, *Bacillus subtilis* (strain: QST 713), validamycin, valifenalate, bixafen, picoxystrobin, bitertanol, hydroxyisoxazole, binapacryl, biphenyl, piperalin, hymexazol, pyraclostrobin, pyrazophos, pyrametostrobin, pyriofenone, pyrisoxazole, pyrifenox, pyributicarb, pyribencarb, pyriminostrobin, pyrimethanil, pyroquilon, vinclozolin, ferbam, famoxadone, phenazine oxide, fenamidone, fenaminstrobin, fenarimol, fenoxanil, ferimzone, fenbuconazole, fenfuram, fenpropidin, fenpropimorph, fenhexamid, fenpiclonil, fenpyrazamine, folpet, phthalide, bupirimate, fuberidazole, blasticidin-S, furametpyr, furalaxyl, furancarboxylic acid, fluazinam, fluoxastrobin, fluopicolide, fluopyram, fluoroimide, fluxapyroxad, fluquinconazole, furconazole, furconazole-cis, fludioxonil, flusilazole, flusulfamide, flutianil, flutolanil, flutriafol, flufenoxystrobin, flumetoquin, flumetover, flumorph, proquinazid, prochloraz, procymidone, prothioconazole, bronopol, prothiocarb, propamocarb-hydrochloride, propiconazole, propineb, probenazole, bromuconazole, hexaconazole, benalaxyl, benalaxyl-M, benodanil, benomyl, pefurazoate, penconazole, pencycuron, benzovindiflupyr, benthiazole, benthiavalicarb-isopropyl, penthiopyrad, penflufen, boscalid, fosetyl-alminium, polyoxin, polycarbamate, mancopper, mandipropamid, mancozeb, maneb, myclobutanil, mildiomycin, methasulfocarb, metam, metalaxyl, metalaxyl-M, metconazole, metiram, metominostrobin, metrafenone, mepanipyrim, meptyldinocap, mepronil, iodocarb, mineral oils, organic oils, oxyquinoline sufate, silver, Bordeaux mixture, copper compounds such as copper oxychloride, cuprous oxide, copper hydroxide, copper sulfate, oxine-copper, copper nonylphenyl sulfonate., sulfur compounds, potassium bicarbonate, sodium bicarbonate, phosphorous acid and salts, fatty acid glyceride, extract of *Lentinura edodes* mycelium, and a microbial pesticide, for example, a bacterium belonging to the genus *Erwinia,* a bacterium belonging to the genus *Pseudomonas,* a bacterium belonging to the genus *Xanthomonas,* a bacterium belonging to the genus *Bacillus,* a bacterium belonging to the genus *Talaromyces,* a bacterium belonging to the genus *Trichoderma,* a bacterium belonging to the genus *Fusarium,* a bacterium belonging to the genus *Gliocladium,* laminarin, can be used.

As specific examples of the herbicide which is jointly used, for example, one or more members selected from 2, 3, 6-TBA, 2,4-D (inclusive of salts of amine, diethylamine, triethanolamine, isopropylamine, sodium, lithium.), 2,4-DB, 2, 4-PA, ACN, AE-F-150944 (Code No.), CAT, DBN, DCBN, DCMU, DCPA, DNOC (inclusive of salts of amine, sodium.), DPA, EPTC, IPC, MCPA, MCPA-isopropylamine, MCPA-ethyl, MCPA-sodium, MCPA-thioethyl, MCPB, MCPP, MDBA, MDBA-isopropylamine, MDBA-sodium, PAC, S-9750 (Code No.), SAP, S-metolachlor, SW-065 (Code No.), SYP-298 (Code No.), SYP-300 (Code No.), TCA (inclusive of salts of sodium, calcium, ammonia.), TCTP, ioxynil, ioxynil-octanoate, aclonifen, acrolein, azafenidin, acifluorfen-sodium, azimsulfuron, asulam, acetochlor, atrazine, anilofos, amicarbazone, amidosulfuron, amitrole, aminocyclopyrachlor, aminopyralid, amiprofs-methyl, ametryn, alachlor, alloxydim, ancymidol, isouron, isoxachlortole, isoxaflutole, isoxaben, isoproturon, ipfencarbazone, imazaquin, imazapic (inclusive of salts of amine.), imazapyr (inclusive of salts of isopropylamine.), imazamethabenz-methyl, imazamox (inclusive of salts of amine.), imazethapyr (inclusive of salts of amine.), imazosulfuron, indaziflam, indanofan, esprocarb, eglinazine-ethyl, ethametsulfuron-methyl, ethalfluralin, ethidimuron, ethoxysulfuron, ethoxyfen-ethyl, ethofumesate, etobenzanid, endothal-disodium, oxadiazon, oxadiargyl, oxaziclomefone, oxasulfuron, oxyfluorfen, oryzalin, orthosulfamuron, orbencarb, oleic acid, cafenstrole, carfentrazone-ethyl, karbutilate, carbetamide, quizalofop, quizalofop-P-ethyl, quizalofop-P-tefuryl, quizalofop-ethyl, quinoclamine, quinclorac, quinmerac, cumyluron, clacyfos, glyphosate (inclusive of salts of sodium, potassium, amine, propylamine, isopropylamine, dimethylamine, trimesium.), glufosinate (inclusive of salts of amine, sodium.), clethodim, clodinafop-propargyl, clopyralid, clomazone, chlomethoxyfen, clomeprop, cloransulam-methyl, chloramben, chloridazon, chlorimuron-ethyl, chlorsulfuron, chlorthal-dimethyl, chlorthiamid, chlorphthalim, chlorflurenol (inclusive of lower alkyl esters), chlorpropham, chlorbromuron, chlormequat, chloroxuron, chlorotoluron, saflufenacil, cyanazine, cyanamide, diuron, diethatyl-ethyl, dicamba (inclusive of salts of amine, diethylamine, isopropylamine, diglycolamine, sodium, lithium.), cycloate, cycloxydim, diclosulam, cyclosulfamuron, dichlobenil, diclofop-P-methyl, diclofop-methyl, dichlorprop, dichlorprop-P, diquat (-dibromide), dithiopyr, siduron, dinitramine, cinidon-ethyl, cinosulfuron, dinoseb, dinoterb, cyhalofop-butyl, diphenamid, difenzoquat, diflufenican, diflufenzopyr, simazine, dimethachlor, dimethametryn, dimethenamid, dimethenamid-P, simetryn, dimepiperate, dimefuron, cinmethylin, swep, sulcotrione, sulfentrazone, sulfosate, sulfosulfuron, sulfometuron-methyl, sethoxydim, terbacil, daimuron, dazomet, dalapon, thiazopyr, thiencarbazone-methyl (inclusive of a sodium salt, methyl ester.), tiocarbazil, thiobencarb, thidiazimin, thidiazuron, thifensulfuron-methyl, n-decanol, desmedipham, desmetryne, tetrapion, thenylchlor, tebutam, tebuthiuron, tepraloxydim, tefuryltrione, terbuthylazine, terbutryn, terbumeton, tembotrione, topramezone, tralkoxydim, triaziflam, triafamone, triasulfuron, tri-allate, trietazine, triclopyr, triclopyr-butotyl, tritosulfuron, triflusulfuron-methyl, trifluralin, trifloxysulfuron-sodium, tribenuron-methyl, naptalam (inclusive of salts of sodium.), naproanilide, napropamide, nicosulfuron, neburon, norflurazon, vernolate, paraquat dichloride, haloxyfop, haloxyfop-methyl, haloxyfop-P-methyl, haloxyfop-etotyl, halosulfuron-methyl, bilanafos-sodium, picloram, picolinafen, bicyclopyrone, bispyribac-sodium, pinoxaden, bifenox, piperophos, pyraclonil, pyrasulfotole, pyrazoxyfen, pyrazosulfuron-ethyl, pyrazolynate, bilanafos, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, phenisopham, fenuron, fenoxasulfone, fenoxaprop-P-ethyl, fenoxaprop-ethyl, fenclorim, fenthiaprop-ethyl, fentrazamide, phenmedipham, foramsulfuron, butachlor, butafenacil, butamifos, butylate, butenachlor, butralin, butroxydim, flazasulfuron, flamprop-methyl, flamprop-M-methyl, flamprop-ethyl, flamprop-isopropyl, flamprop-M-isopropyl, primisulfuron-methyl, fluazifop-butyl, fluazifop-P-butyl, fluazolate, fluometuron, fluoroglycofen-ethyl, flucarbazone-sodium, fluchloralin, flucetosulfuron, fluthiacet-methyl, flupyrsulfuron-methyl-sodium, flufenacet, flufenpyr-ethyl, flupropanate, flupoxam, flumioxazin, flumiclorac-pentyl, flumetsulam, fluridone, flurtamone, flurprimidol, fluroxypyr, flurochloridone, pretilachlor, procarbazone-sodium, prodiamine, prosulfuron, prosulfocarb, propaquizafop, propachlor, propazine, propanil, propyzamide, propisochlor, propyrisulfuron, propham, profluazol, propoxycarbazone-sodium, profoxydim, bromacil, brompyrazon, prometryn, prometon, bromoxyni (inclusive of esters with butyric acid, octanoic acid, heptanoic acid.), bromofenoxim, bromobutide, florasulam, hexazinone, benefin, pethoxamid, benazolin, penoxsulam, beflubutamid, pebulate, pelargonic acid, bencarbazone, benzfendizone, bensulide, bensulfuron-methyl, benzobicyclon, benzofenap, bentazone (inclusive of salts of sodium.), pentanochlor, benthiocarb, pendimethalin, pentoxazone, benfluralin, benfuresate, fosamine, fomesafen, forchlorfenuron, maleic hydrazide, mecoprop-potassium, mecoprop-P, mesosulfuron-methyl, mesotrione, metazachlor, methabenzthiazuron, metazosulfuron, metamitron, metamifop, metam, methiozolin, methyldymron, metoxuron, metosulam, metsulfuron-methyl, metobromuron, metobenzuron, metolachlor, metribuzin, mepiquat-chloride, mefenacet, monosulfuron, monosulfuron-methyl, monolinuron, molinate, iodosulfulon-methyl-sodium, iofensulfuron-sodium, lactofen, linuron, rimsulfuron, lenacil, *Xanthomonas campestris, Drechslera monoceras,,* can be used.

As specific examples of the plant growth-controlling agent which is jointly used, for example, one or more members selected from α-naphthalene acetamide, 1-methylcyclopropene, 2,6-diisopropylnaphthalene, 4-CPA, aviglycine, abscisic acid, ancymidol, inabenfide, indole acetic acid, indole butyric acid, uniconazole, uniconazole-P, Ecolyst, ethychlozate, ethephon, oxine-sulfate, carvone, calcium formate, cloxyfonac-sodium, cloxyfonac-potassium, cloprop, chlormequat, choline, cytokinins, cyanamide, cyclanilide, dichlorprop, dikegulac, gibberellin, dimethipin, sintofen, daminodide, thidiazuron, n-decyl alcohol, 1-triacontanol, paclobutrazol, paraffin, pyraflufen-ethyl, butralin, flumetralin, flurprimidol, flurenol, prohydrojasmon, heptamaloxyloglucan, PESA (4-oxo-[(2-phenylethyl)amino]butanoic acid), (6-)benzylaminopurine, pendimethalin, forchlorfenuron, maleic hydrazide, mepiquat, mefluidide, wax, MCPA-thioethyl, MCPB, calcium chloride, calcium sulfate, calcium peroxide, chlorella extract, mixed crude drug extracts,, can be used.

In the present invention, the crop is treated once at the beginning of blooming or at the second bunch anthesis. Examples of the treatment method include a method of spraying the above-described diluted solution onto a plant body.

Though the crop to which the present invention is applicable is not particularly limited so long as it is a solanaceous crop, the present invention is applicable extremely effectively to said crop such as a green pepper, a Chinese wolfberry (kuko) . , crops belonging to the genus *Solanum* (e.g., tomato, eggplant, potato.).

In addition, the method of the present invention can be similarly used for solanaceous crops transformed by means of techniques such as genetic recombination.

Working examples of the present invention are hereinafter described.

### [Examples]

### (Test Example 1)

Influences of the treatment with prohexadione-calcium against the yield and the amino acid content were examined according to the following experimental outline while making tomato as a subject.

### <Experimental outline>

Material: Tomato (*Lycopersicum esculentum*) (variety: Momotaro)
Permanent planting date: November 10, 2010, second bunch anthesis: December 20, 2010
Treatment chemical: VIVIFUL Flowable (a registered trademark, containing 1.0 % of prohexadione-calcium)
Treatment method: The chemical was sprayed over the whole of the plant body using a CO₂ backpack sprayer.
Treatment concentration: Prohexadione-calcium, 10 ppm Amount of treatment water: 1,000 L/ha
Yield search: The plant was successively harvested while making the fruit color as a yardstick, and a fresh weight was measured. The harvesting was conducted until day 125 after the permanent planting.

Measurement of amino acid content: The measurement of the amino acid content was conducted while making a fruit of the second bunch anthesis as a subject. Fruits sampled at a proper time of harvesting were stored in a freezer (at -20 °C), and the amino acid content was properly measured according to the usual method.

### Treated plot:

Treated at the second bunch anthesis
Treated 6 times every 15 days after the second bunch anthesis

### Non-treated plot (control plot)

The search results of the yield (accumulated fruit weight) are shown in Table 1. In comparison with the non-treated plot, in all of the plot treated with VIVIFUL Flowable one time (treated at the second bunch anthesis) and the plot treated with VIVIFUL Flowable 6 times (treated 6 times every 15 days after the second bunch anthesis), an increase of the yield (accumulated fruit weight) was perceived.

**Table 1**

| Comparison of yield (accumulated fruit weight) | |
|---|---|
| Treated plot | (g/plant) |
| Treated at the second bunch anthesis | 1063 |
| Treated 6 times every 15 days after the second bunch anthesis | 1084 |
| Non-treated plot | 977 |

The measurement results of the amino acid content are shown in Table 2. In comparison with the non-treated plot, in the plot treated with VIVIFUL Flowable one time (treated at the second bunch anthesis) and the plot treated with VIVIFUL Flowable 6 times (treated 6 times every 15 days after the second bunch anthesis), an increase of the content regarding almost all of amino acids was perceived.

**Table 2**

| Comparison of the amount of endogenous amino acid in tomato sample | | | | |
|---|---|---|---|---|
| Amino acid | | Treated at the second bunch anthesis | Treated 6 times every 15 days after the second bunch anthesis | Non-treated plot |
| GABA | Concentration (ppm) | 602 | 687 | 404 |
| | Ratio to non-treated plot (%) | 149 | 170 | 100 |
| Ala | Concentration (ppm) | 110 | 63 | 74 |
| | Ratio to non-treated plot (%) | 149 | 85 | 100 |
| Arg | Concentration (ppm) | 66 | 64 | 44 |
| | Ratio to non-treated plot (%) | 150 | 144 | 100 |
| Asn | Concentration (ppm) | 374 | 377 | 316 |
| | Ratio to non-treated plot (%) | 118 | 119 | 100 |
| Asp | Concentration (ppm) | 806 | 712 | 594 |
| | Ratio to non-treated plot (%) | 136 | 120 | 100 |
| Cys | Concentration (ppm) | 5 | 3 | 3 |
| | Ratio to non-treated plot (%) | 132 | 101 | 100 |
| Gln | Concentration (ppm) | 2414 | 2448 | 1826 |
| | Ratio to non-treated plot (%) | 132 | 134 | 100 |
| Glu | Concentration (ppm) | 3389 | 3082 | 2535 |
| | Ratio to non-treated plot (%) | 134 | 122 | 100 |
| Gly | Concentration (ppm) | 14 | 14 | 7 |
| | Ratio to non-treated plot (%) | 189 | 193 | 100 |
| His | Concentration (ppm) | 49 | 48 | 36 |
| | Ratio to non-treated plot (%) | 135 | 132 | 100 |
| Ile | Concentration (ppm) | 41 | 41 | 28 |
| | Ratio to non-treated plot (%) | 144 | 145 | 100 |
| Leu | Concentration (ppm) | 35 | 35 | 27 |
| | Ratio to non-treated plot (%) | 131 | 131 | 100 |
| Lys | Concentration (ppm) | 42 | 40 | 32 |
| | Ratio to non-treated plot (%) | 129 | 126 | 100 |
| Met | Concentration (ppm) | 18 | 16 | 14 |
| | Ratio to non-treated plot (%) | 133 | 114 | 100 |
| Phe | Concentration (ppm) | 99 | 96 | 68 |
| | Ratio to non-treated plot (%) | 145 | 140 | 100 |
| Pro | Concentration (ppm) | 95 | 129 | 98 |
| | Ratio to non-treated plot (%) | 97 | 132 | 100 |
| Ser | Concentration (ppm) | 188 | 226 | 180 |
| | Ratio to non-treated plot (%) | 105 | 126 | 100 |
| Thr | Concentration (ppm) | 62 | 73 | 52 |
| | Ratio to non-treated plot (%) | 121 | 142 | 100 |
| Trp | Concentration (ppm) | 9 | 9 | 6 |
| | Ratio to non-treated plot (%) | 138 | 135 | 100 |
| Tyr | Concentration (ppm) | 16 | 18 | 12 |
| | Ratio to non-treated plot (%) | 133 | 151 | 100 |
| Val | Concentration (ppm) | 19 | 22 | 13 |
| | Ratio to non-treated plot (%) | 146 | 164 | 100 |

### (Test Example 2)

Influences of the treatment with prohexadione-calcium upon the yield and the amino acid content were examined according to the following experimental outline while making potato as a subject.

### <Experimental outline>

Material: Potato *(Solanum tuberosum)* (variety: May Queen) Sowing date: May 19, 2011
Treatment chemical: BIOLOCK Flowable (a registered trademark, containing 25.0 % of prohexadione-calcium)
Treatment method: The chemical was sprayed over the whole of the plant body using a CO₂ backpack sprayer.
Treatment concentration: Prohexadione-calcium, 250 ppm Amount of treatment water: 1,000 L/ha
Time of treatment: July 6, 13, 20 and 27 and August 3, 2011 (5 times in total)
Yield search: A tuber was harvested on September 11, and its fresh weight was measured. Poorly grown potatoes (tubers of not more than 30 g) were excluded from the measurement.
Measurement of amino acid content: A tuber having an average weight was chosen from each treated plot, and the amino acid content was measured according to the usual method.

### Treated plot:

Treated with the BIOLOCK Flowable

### Non-treated plot (control plot)

*: For the purpose of epidemic prevention, both of the plots were properly treated with a 1000-fold diluted solution of PROPOSE (a registered trademark).

The search results of the yield are shown in Table 3. In comparison with the non-treated plot, in the plot treated with BIOLOCK Flowable 5 times (plot treated with BIOLOCK Flowable), an increase of the yield was perceived.

**Table 3**

| Comparison of yield of tuber | |
|---|---|
| Treated plot | (kg/m²) |
| Treated with BIOLOCK Flowable | 4.02 |
| Non-treated plot | 3.68 |

The measurement results of the amino acid content are shown in Table 4. In comparison with the non-treated plot, in the plot treated with BIOLOCK Flowable 5 times (treated with BIOLOCK Flowable), an increase of the content regarding almost all of amino acids was perceived.

**Table 4**

| Comparison of the amount of endogenous amino acid in potato sample | | | |
|---|---|---|---|
| Amino acid | | Treated plot with BIOLOCK | Non-treated plot |
| GABA | Concentration (ppm) | 446 | 409 |
| | Ratio to non-treated plot (%) | 109 | 100 |
| Ala | Concentration (ppm) | 67 | 46 |
| | Ratio to non-treated plot (%) | 145 | 100 |
| Arg | Concentration (ppm) | 307 | 268 |
| | Ratio to non-treated plot (%) | 115 | 100 |
| Asn | Concentration (ppm) | 2713 | 2399 |
| | Ratio to non-treated plot (%) | 113 | 100 |
| Asp | Concentration (ppm) | 264 | 238 |
| | Ratio to non-treated plot (%) | 111 | 100 |
| Cys | Concentration (ppm) | 3 | 2 |
| | Ratio to non-treated plot (%) | 135 | 100 |
| Gln | Concentration (ppm) | 961 | 958 |
| | Ratio to non-treated plot (%) | 100 | 100 |
| Glu | Concentration (ppm) | 817 | 767 |
| | Ratio to non-treated plot (%) | 106 | 100 |
| Gly | Concentration (ppm) | 17 | 16 |
| | Ratio to non-treated plot (%) | 109 | 100 |
| His | Concentration (ppm) | 94 | 68 |
| | Ratio to non-treated plot (%) | 138 | 100 |
| Ile | Concentration (ppm) | 168 | 126 |
| | Ratio to non-treated plot (%) | 134 | 100 |
| Leu | Concentration (ppm) | 80 | 71 |
| | Ratio to non-treated plot (%) | 112 | 100 |
| Lys | Concentration (ppm) | 239 | 183 |
| | Ratio to non-treated plot (%) | 131 | 100 |
| Met | Concentration (ppm) | 158 | 132 |
| | Ratio to non-treated plot (%) | 119 | 100 |
| Phe | Concentration (ppm) | 158 | 111 |
| | Ratio to non-treated plot (%) | 142 | 100 |
| Pro | Concentration (ppm) | 118 | 96 |
| | Ratio to non-treated plot (%) | 122 | 100 |
| Ser | Concentration (ppm) | 111 | 88 |
| | Ratio to non-treated plot (%) | 126 | 100 |
| Thr | Concentration (ppm) | 152 | 122 |
| | Ratio to non-treated plot (%) | 124 | 100 |
| Trp | Concentration (ppm) | 71 | 42 |
| | Ratio to non-treated plot (%) | 167 | 100 |
| Tyr | Concentration (ppm) | 215 | 141 |
| | Ratio to non-treated plot (%) | 152 | 100 |
| Val | Concentration (ppm) | 492 | 382 |
| | Ratio to non-treated plot (%) | 129 | 100 |

### (Test Example 3)

Influences of each of the treatment with prohexadione-calcium and the treatment with trinexapac-ethyl upon the yield and the amino acid content were examined according to the following experimental outline while making tomato as a subject.

### <Experimental outline>

Material: Tomato (*Lycopersicum esculentum*) (variety: Pretz Tomato)
Permanent planting date: January 8, 2008
Treatment chemical: VIVIFUL Flowable (a registered trademark, containing 1.0 % of prohexadione-calcium) and PRIMO MAXX Liquid (a registered trademark, containing of 10.4 % trinexapac-ethyl)
Treatment method: The chemical was sprayed over the whole of the plant body using an injector hand sprayer.
Treatment concentration: Prohexadione-calcium, 10 ppm, 30 ppm, and 100 ppm; trinexapac-ethyl, 10 ppm and 30 ppm Amount of treatment water: 1,000 L/ha
Treatment date: February 27, 2008 at the beginning of blooming Yield search: The plant was successively harvested while making the fruit color as a yardstick, and a fresh weight was measured. The harvesting was conducted until day 159 after the permanent planting.

### Treated plot:

Treated with 10 ppm of prohexadione-calcium
Treated with 30 ppm of prohexadione-calcium
Treated with 100 ppm of prohexadione-calcium
Treated with 10 ppm of trinexapac-ethyl
Treated with 30 ppm of trinexapac-ethyl

### Non-treated plot (control plot)

The results of the yield search are shown in Table 5. In comparison with the non-treated plot, in all of the plots treated with prohexadione-calcium in concentrations of 10 ppm, 30 ppm and 100 ppm, respectively and the plots treated with trinexapac-ethyl in concentrations of 10 ppm and 30 ppm, respectively, an increase of the yield (accumulated fruit weight) was perceived.

**Table 5**

| Comparison of yield (accumulated fruit weight) | |
|---|---|
| Treated plot | (g/plant) |
| Treated with 10 ppm of prohexadione-calcium | 2238 |
| Treated with 30 ppm of prohexadione-calcium | 2454 |
| Treated with 100 ppm of prohexadione-calcium | 2305 |
| Treated with 10 ppm of trinexapac-ethyl | 2249 |
| Treated with 30 ppm of trinexapac-ethyl | 2155 |
| Non-treated plot | 2083 |

The present invention is summarized as follows.

An object of the present invention is to provide an agent capable of not only increasing the yield of solanaceous crops simply and efficiently but increasing the content of an amino acid in solanaceous crops and also a method for applying the agent concerned.

Then, the yield of a solanaceous crop and the content of an amino acid can be increased simply and efficiently by applying an agent containing a cyclohexane derivative represented by the foregoing formula (I) and/or its salt as an active ingredient.

## Claims

1. Use of an agent containing a cyclohexane derivative represented by the following formula (I) and/or its salt as an active ingredient: 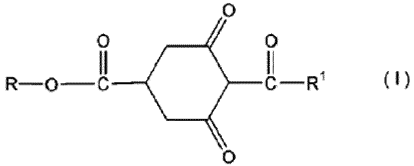 wherein R represents hydrogen, a C₁ to C₆ alkyl group, a C₁ to C₆ haloalkyl group, or a phenyl group; and R¹ represents hydrogen, a C₁ to C₆ alkyl group, a C₃ to C₆ cycloalkyl group, or a benzyl group; and the salt represents an alkali metal salt or an alkaline earth metal salt; in application to a solanaceous crop once at the beginning of blooming or at the second bunch anthesis, for increasing the yield of the solanaceous crop and the content of γ-aminobutyric acid (GABA) thereof.

2. Use according to claim 1, wherein the cyclohexane derivative or its salt is one represented by the formula (I) wherein R represents hydrogen or a C₁ to C₆ alkyl group; R¹ represents a C₁ to C₆ alkyl group or a C₃ to C₆ cycloalkyl group; and the salt represents a calcium salt.

3. Use according to claim 2, wherein the cyclohexane derivative or its salt is one or more members selected from a compound represented by the following formula (II), a calcium salt compound represented by the following formula (III), and a compound represented by the following formula (VII):

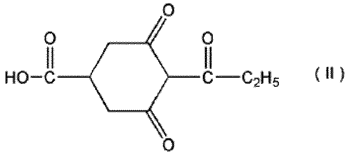

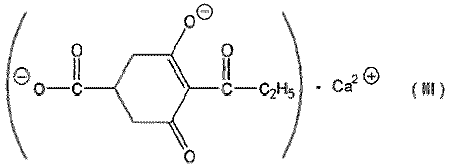

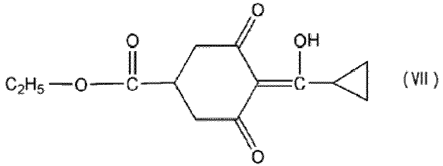

4. Use according to any one of claims 1 to 3, wherein the application amount of the cyclohexane derivative is in a concentration of 1 to 1 000 ppm.

5. Use according to any one of claims 1 to 4, wherein the solanaceous crop is a crop belonging to the family *Solanum,* genus *Solanaceae.*

6. Use according to claim 5, wherein the genus *Solanaceae* is tomato or potato.

## Patentansprüche

1. Verwendung eines Mittels, enthaltend ein Cyclohexanderivat, dargestellt durch die nachstehende Formel (I), und/oder sein Salz als einen aktiven Bestandteil: 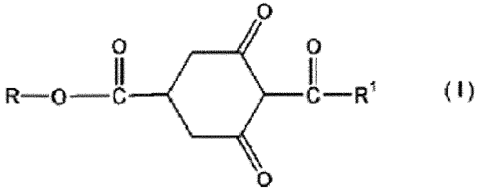 wobei R Wasserstoff, eine C₁- bis C₆-Alkylgruppe, eine C₁- bis C₆-Haloalkylgruppe oder eine Phenylgruppe darstellt; und R¹ Wasserstoff, eine C₁- bis C₆-Alkylgruppe, eine C₃- bis C₆-Cycloalkylgruppe oder eine Benzylgruppe darstellt; und das Salz ein Alkalimetallsalz oder ein Erdalkalimetallsalz darstellt; in der Anwendung auf ein Nachtschattengewächs einmal am Anfang der Blüte oder bei der zweiten Blütezeit des Büschels, um den Ertrag des Nachtschattengewächses und den Gehalt von γ-Aminobuttersäure (GABA) davon zu erhöhen.

2. Verwendung nach Anspruch 1, wobei das Cyclohexanderivat oder sein Salz eines, dargestellt durch die Formel (I), ist, wobei R Wasserstoff oder eine C₁-bis C₆-Alkylgruppe darstellt; R¹ eine C₁- bis C₆-Alkylgruppe oder eine C₃- bis C₆-Cycloalkylgruppe darstellt; und das Salz ein Calciumsalz darstellt.

3. Verwendung nach Anspruch 2, wobei das Cyclohexanderivat oder sein Salz ein oder mehrere Mitglieder, ausgewählt aus einer Verbindung, dargestellt durch die nachstehende Formel (II), einer Calciumsalzverbindung, dargestellt durch die nachstehende Formel (III), und einer Verbindung, dargestellt durch die nachstehende Formel (VII), ist:

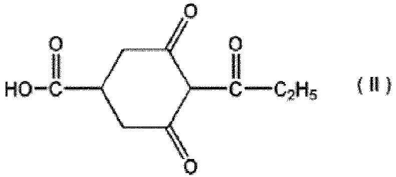

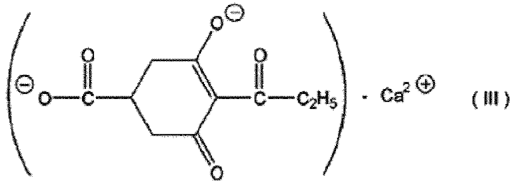

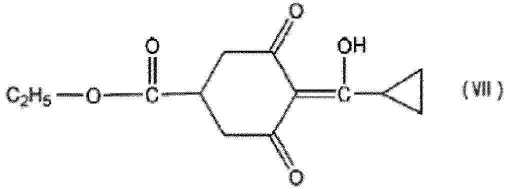

4. Verwendung nach einem der Ansprüche 1 bis 3, wobei die Anwendungsmenge des Cyclohexanderivats in einer Konzentration von 1 bis 1000 ppm vorliegt.

5. Verwendung nach einem der Ansprüche 1 bis 4, wobei das Nachtschattengewächs ein Gewächs, welches zu der Familie *Solanum,* Gattung *Solanaceae* gehört, ist.

6. Verwendung nach Anspruch 5, wobei die Gattung *Solanaceae* Tomate oder Kartoffel ist.

## Revendications

1. Utilisation d'un agent contenant un dérivé de cyclohexane représenté par la formule (I) suivante et/ou son sel en tant que principe actif : 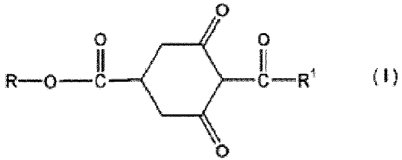 dans laquelle R représente un atome d'hydrogène, un groupe alkyle en C₁ à C₆, un groupe halogénoalkyle en C₁ à C₆, ou un groupe phényle ; et R¹ représente un atome d'hydrogène, un groupe alkyle en C₁ à C₆, un groupe cycloalkyle en C₃ à C₆, ou un groupe benzyle ; et le sel représente un sel de métal alcalin ou un sel de métal alcalino-terreux ; dans une application à une culture de solanacées une fois au début de la floraison ou au moment de la seconde anthèse des racèmes, pour augmenter le rendement de la culture des solanacées et leur teneur en acide γ-aminobutyrique (GABA).

2. Utilisation selon la revendication 1, dans laquelle le dérivé de cyclohexane ou son sel est un représenté par la formule (I) dans laquelle R représente un atome d'hydrogène ou un groupe alkyle en C₁ à C₆ ; R¹ représente un groupe alkyle en C₁ à C₆ ou un groupe cycloalkyle en C₃ à C₆ ; et le sel représente un sel de calcium.

3. Utilisation selon la revendication 2, dans laquelle le dérivé de cyclohexane ou son sel est un ou plusieurs éléments sélectionnés parmi un composé représenté par la formule (II) suivante, un composé sel de calcium représenté par la formule (III) suivante, et un composé représenté par la formule (VII) suivante :

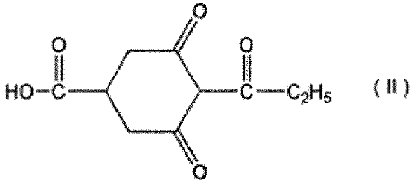

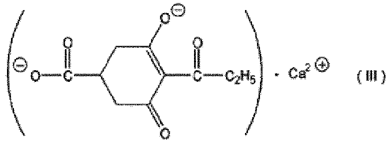

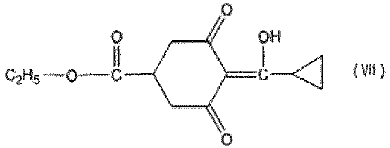

4. Utilisation selon l'une quelconque des revendications 1 à 3, dans laquelle la quantité d'application du dérivé de cyclohexane est en une concentration de 1 à 1 000 ppm.

5. Utilisation selon l'une quelconque des revendications 1 à 4, dans laquelle la culture de solanacées est une culture appartenant à la famille *Solanum,* genre *Solanaceae.*

6. Utilisation selon la revendication 5, dans laquelle le genre *Solanaceae* est la tomate ou la pomme de terre.
